# EUROPÄISCHE PATENTANMELDUNG

(11) **EP 0 663 733 A1**
(43) Veröffentlichungstag der Anmeldung: **19.07.1995**
(21) Anmeldenummer: 95890002.9
(22) Anmeldetag: 04.01.1995
(51) Int. Cl.: H04B 1/16, H04B 10/00, H02H 7/18

(54) **Fernsteuerung für ein elektrisch betriebenes, fernsteuerbares Gerät**

(30) Priorität: 13.01.1994 AT 40/94
(71) Anmelder: Koch, Walter, A-8530 Deutschlandsberg (AT)
(72) Erfinder: Koch, Walter, A-8530 Deutschlandsberg (AT)
(74) Vertreter: Hübscher, Helmut, Dipl.-Ing.

(57) **Zusammenfassung**

Es wird eine Fernsteuerung für ein elektrisch betriebenes, fernsteuerbares Gerät (1) beschrieben, das aus einem Handsender aus einem dem fernsteuerbaren Gerät (1) zugeordneten Empfänger mit einer Auswerteschaltung (4), die einen das fernsteuerbare Gerät (1) mit einer elektrischen Energiequelle verbindenden Versorgungsschalter (2) steuert, und aus einer batteriegespeisten Schaltung (6) zur Spannungsversorgung des Empfängers besteht. Um eine Energiefreischaltung des fernsteuerbaren Gerätes (1) zu ermöglichen, ohne die Fernsteuerung zu beeinträchtigen, wird vorgeschlagen, daß der Empfänger über einen Intervallschalter (7) an der batteriegespeisten Schaltung (6) zur Spannungsversorgung anliegt, daß für den Intervallschalter (7) ein von der Auswerteschaltung (4) steuerbarer Taktgeber (8) vorgesehen ist und daß der Handsender eine Schaltung (13) für ein Startsignal aufweist, dessen Sendezeit die Zeitspanne der Schaltintervalle des Intervallschalters (7) übersteigt.

## Beschreibung

Die Erfindung bezieht sich auf eine Fernsteuerung für ein elektrisch betriebenes, fernsteuerbares Gerät, bestehend aus einem Handsender, aus einem dem fernsteuerbaren Gerät zugeordneten Empfänger mit einer Auswerteschaltung, die einen das fernsteuerbare Gerät mit einer elektrischen Energiequelle verbindenden Versorgungsschalter steuert, und aus einer batteriegespeisten Schaltung zur Spannungsversorgung des Empfängers.

Die für die Empfangsbereitschaft des Empfängers, beispielsweise einer Infrarot-Fernsteuerung, benötigte Energie wird bei netzgespeisten Elektrogeräten im allgemeinen über das an das elektrische Netz angeschlossene Elektrogerät bezogen, das aus diesem Grund auch außerhalb des Betriebes nicht vom Netz abgeschaltet werden kann, wenn die Möglichkeit einer Wiederinbetriebnahme mit Hilfe der Fernsteuerung erhalten bleiben soll. Eine solche Netzfreischaltung von Elektrogeräten kann jedoch aus verschiedenen Gründen erwünscht sein, beispielsweise um den Energieverbrauch des für den Empfänger benötigten Netzteiles dieser Elektrogeräte einzusparen oder die durch solche Netzteile bedingten elektrischen Felder zu vermeiden. Zu diesem Zweck ist es bekannt (WO-A1 93/09 634), den Empfänger an eine batteriegespeiste Schaltung zur Spannungsversorgung anzuschließen, so daß auch der Empfänger mit dem Elektrogerät vom Netz abgeschaltet werden kann, ohne auf eine Wiederinbetriebnahme über den Handsender verzichten zu müssen, weil die für den Empfang und die Verarbeitung der Steuersignale sowie für die Betätigung des Versorgungsschalters benötigte Energie der hiefür vorgesehenen Batterie entnommen werden kann. Da der Stromverbrauch der Empfänger bekannter Fernsteuerungen für die Empfangsbereitschaft in bezug auf die Kapazität von üblicherweise in diesem Bereich eingesetzten Batterien vergleichsweise groß ist, kann durch diese bekannte Maßnahme jedoch die Empfangsbereitschaft der Fernsteuerung nur für wenige Tage sichergestellt werden, so daß der Netzteil der Elektrogeräte zur Stromversorgung des Empfängers für seine Empfangsbereitschaft in der Praxis nicht durch Batterien üblicher Kapazität ersetzt wird.

Der Erfindung liegt somit die Aufgabe zugrunde, eine Fernsteuerung für ein elektrisch betriebenes, fernsteuerbares Gerät der eingangs geschilderten Art mit einfachen Mitteln so verbessern, daß eine Freischaltung des Gerätes von der jeweils vorgesehenen elektrischen Energiequelle gewährleistet werden kann, ohne auf die Möglichkeit einer Wiederinbetriebnahme durch die Fernsteuerung auch über eine längere Zeitspanne hinweg verzichten zu müssen.

Die Erfindung löst die gestellte Aufgabe dadurch, daß der Empfänger über einen Intervallschalter an der batteriegespeisten Schaltung zur Spannungsversorgung anliegt, daß für den Intervallschalter ein von der Auswerteschaltung steuerbarer Taktgeber vorgesehen ist und daß der Handsender eine Schaltung für ein Startsignal aufweist, dessen Sendezeit die Zeitspanne der Schaltintervalle des Intervallschalters übersteigt.

Durch das Vorsehen eines Intervallschalters, über den der Empfänger an die batteriegespeiste Spannungsversorgung angeschlossen wird, kann die Empfangsbereitschaft des Empfängers auf kurze, sich zyklisch wiederholende Zeitspannen beschränkt werden, was den durchschnittlichen Stromverbrauch des Empfängers über die gesamte Zykluszeit entsprechend herabsetzt. Diese erhebliche, vor allem durch das Verhältnis zwischen den Schließ- und den Öffnungszeiten des Intervallschalters bestimmte Verringerung des Stromverbrauches macht den wirtschaftlichen Einsatz herkömmlicher Batterien für die Energieversorgung des Empfängers zumindest während der Freischaltung des Elektrogerätes von der elektrischen Energiequelle zum Betreiben des Gerätes möglich. Außerhalb des Betriebes kann daher das Gerät über einen von der Auswerteschaltung des Empfängers gesteuerten Versorgungsschalter von der elektrischen Energiequelle freigeschaltet werden, um bei einem Steuersignal für die Inbetriebnahme wieder an die Energiequelle angeschlossen zu werden. Es muß lediglich dafür gesorgt werden, daß der Empfänger vor einer Steuersignalübertragung durch den Handsender zumindest für die Sendezeit der Steuersignalübertragung eingeschaltet bleibt. Zu diesem Zweck weist der Handsender eine Schaltung für ein Startsignal auf, dessen Sendezeit die Zeitspanne der Schaltintervalle des Intervallschalters übersteigt, so daß auch während der intermittierenden Emfpangsbereitschaft des Empfängers das Startsignal sicher empfangen und ausgewertet werden kann. Aufgrund eines empfangenen Startsignals wird über die Auswerteschaltung des Empfängers der Taktgeber für den Intervallschalter im Sinne eines Schließens des Intervallschalters angesteuert und der Empfänger zumindest für die Sendezeit der sich an das Startsignal anschließenden Steuersignalübertragung ununterbrochen an die Spannungsversorgung angeschlossen. Die Steuersignale können demnach ordnungsgemäß ausgewertet und zur Steuerung des Gerätes eingesetzt werden, das zunächst zur Inbetriebnahme über den Versorgungsschalter wieder an die elektrische Energiequelle angeschlossen wird.

Da die Empfangsbereitschaft des Empfängers während der Energiefreischaltung des fernsteuerbaren Gerätes ausschließlich auf den sicheren Empfang des Startsignals des Handsenders abgestimmt zu werden braucht, kann die Schließzeit des Intervallschalters gegenüber seiner Öffnungszeit sehr klein gewählt werden. Während der Öffnungszeit des Intervallschalters braucht ja lediglich der Taktgeber für den Steuerschalter mit Energie versorgt zu werden, die bei geeigneter Wahl des Taktgebers in der Gesamtenergiebilanz kaum ins Gewicht fällt. Als Taktgeber kann in diesem Zusammenhang vorteilhaft ein CMOS-Oszillator eingesetzt werden. Das periodische Ein- und Ausschalten der Spannungsversorgung des Empfängers erlaubt eine ausreichende Verringerung des Stromverbrauches des Empfängers, um seine Energieversorgung ausschließlich über eine Batterie in wirtschaftlicher Weise sicherstellen zu können, wenn der Empfänger nach jeder Steuersignalübertragung wieder in eine intermittierende Empfangsbereitschaft versetzt wird, die lediglich das Erfassen eines vom Handsender gesendeten Startsignals erlaubt. Mit einem geringfügig größeren Schaltungsaufwand kann die Schaltung zur Spannungsversorgung aber auch zusätzlich an einen Netzteil angeschlossen werden, der mit einem die elektrische Energiequelle bildenden elektrischen Netz über den Versorgungsschalter in Verbindung steht, so daß bei jeder Inbetriebnahme des Gerätes die Spannungsversorgung des Empfängers unter einer Entlastung der Batterie über das Netz erfolgt. Durch diese Maßnahme wird naturgemäß die Standzeit der Batterie entsprechend verlängert. Die Energieversorgung vom Netz kann selbstverständlich auch zum Laden von aufladbaren Batterien herangezogen werden, die während der Netzfreischaltung des Elektrogerätes die Energieversorgung des Empfängers der Fernsteuerung sicherstellen.

Der durch die erfindungsgemäßen Maßnahmen ermöglichte geringe Energiebedarf für die Empfangsbereitschaft des dem fernsteuerbaren Gerät zugeordneten Empfängers macht es darüber hinaus möglich, die Schaltung zur Spannungsversorgung des Empfängers an der aus wenigstens einer Batterie gebildeten elektrischen Energiequelle zum Betreiben des fernsteuerbaren Gerätes anzuschließen, so daß auch batteriegespeiste Geräte über eine lange Zeitspanne empfangsbereit sind, ohne ihren Betrieb zu gefährden.

Da es nicht auf die Art der Fernsteuerung ankommt, können neben den üblichen Infrarot-Fernsteuerungen Funkfernsteuerungen oder Fernsteuerungen mit Ultraschall od. dgl. eingesetzt werden.

In der Zeichnung ist der Erfindungsgegenstand beispielsweise dargestellt. Es zeigen
Fig. 1 den Empfänger einer erfindungsgemäßen Fernsteuerung in einem vereinfachten Blockschaltbild und
Fig. 2 den Sender dieser Fernsteuerung ebenfalls in einem vereinfachten Blockschaltbild.

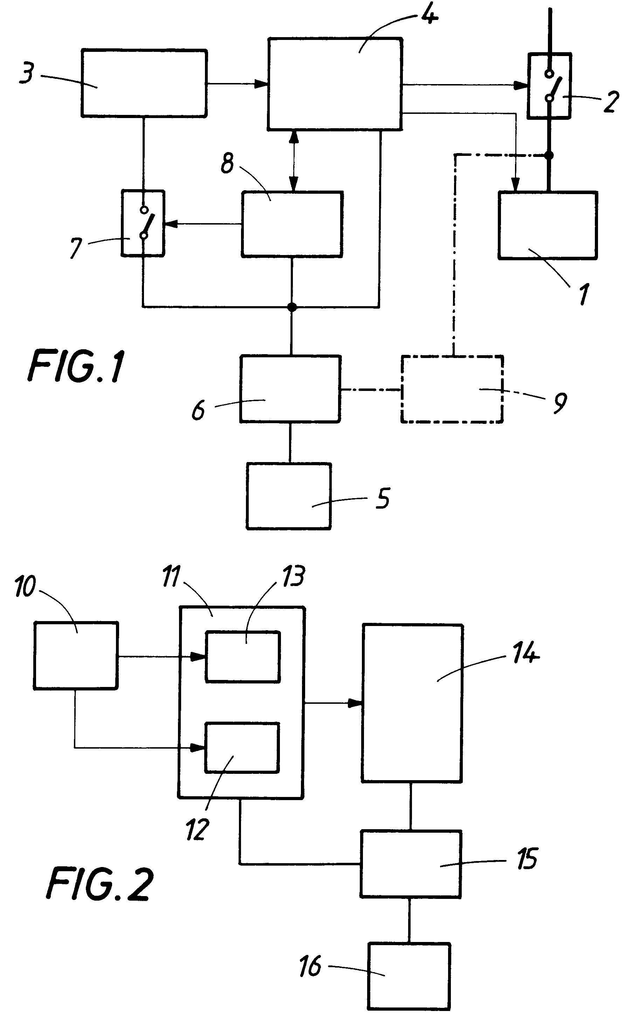

Der in der Fig. 1 dargestellte Empfänger einer Infrarot-Fernsteuerung für ein Elektrogerät 1, das über einen Versorgungsschalter 2 an eine durch ein elektrischenes Netz gebildete Energiequelle angeschlossen ist, besteht im wesentlichen aus einem die Infrarotsignale aufnehmenden Empfangsteil 3, der die empfangenen Lichtsignale in elektrische Signale umwandelt und an eine Auswerteschaltung 4 weiterleitet, die einerseits Steuersignale an das Elektrogerät 1 abgibt und anderseits den Versorgungsschalter 2 ansteuert. Die Spannungsversorgung des Empfängers erfolgt über eine von einer Batterie 5 gespeiste Schaltung 6, an die der Empfangsteil 3 über einen Intervallschalter 7 angeschlossen ist, der von einem Taktgeber 8, vorzugsweise einem CMOS-Oszillator, gesteuert wird. Da der Intervallschalter 7 über den Taktgeber 8 nur für kurze Zeit empfangsbereit geschaltet wird, ergibt sich ein auf die gesamte Periode bezogener mittlerer Stromverbrauch, der sich durch das Verhältnis der Ein- und Ausschaltzeiten des Intervallschalters 7 bestimmt. Geht man beispielsweise von einem Stromverbrauch für die Empfangsbereitschaft des Empfängers von 2 mA und einer Einschaltzeit von 500 µs sowie einer Ausschaltzeit von 200 ms aus, so ergbit sich ein auf die gesamte Periode bezogener durchschnittlicher Stromverbrauch von 5 µA. Dies bedeutet, daß bei einer Batterie mit einer Kapazität von z. B. 500 mAh bei einer ununterbrochenen Energieversorgung des Empfängers durch die Batterie eine Standzeit von 250 Stunden erreicht wird, bei der enfindungsgemäßen, intermittierenden Empfangsbereitschaft mit einem durchschnittlichen Stromverbrauch von 5 µA jedoch eine Standzeit von 100 000 Stunden, wenn der minimale Stromverbrauch des Taktgebers vernachlässigt wird.

Trotz der intermittierenden Empfangsbereitschaft des Empfängers muß ein ordnungsgemäßer Empfang und eine ordnungsgemäße Auswertung der vom Handsender gesendeten Steuersignale sichergestellt werden. Zu diesem Zweck wird vom Handsender vor jeder Steuersignalübertragung ein Startsignal gesendet, dessen Sendezeit länger als die Intervallzeit des Intervallschalters 7 ist und beispielsweise der eineinhalbfachen Öffnungszeit des Intervallschalters 7 entspricht, so daß während der Startsignalübertragung der Emfpangsteil 3 zumindest einmal an die Spannungsversorgungsschaltung 6 angeschlossen wird und einen Abschnitt des Startsignals empfangen kann, der von der Auswerteschaltung 4 erkannt wird, die den Taktgeber 8 im Sinne eines dauernden Schließens des Intervallschalters 7 für die Zeit der nachfolgenden Steuersignalübertragung ansteuert. Die im Anschluß an das Startsignal übertragenen Steuersignale können daher in üblicher Weise empfangen und für die Steuerung des Elektrogerätes 1 ausgenützt werden, das zur Inbetriebnahme zunächst über den Versorgungsschalter 2 an das elektrische Netz angeschlossen werden muß, wenn ein entsprechendes Steuersignal empfangen wird. Nach der Steuersignalübertragung kann der Intervallschalter 7 über den Taktgeber 8 wieder im Sinne einer intermittierenden Empfangsbereitschaft getaktet werden, und zwar unabhängig vom Betriebszustand des Elektrogerätes 1. Wird das Elektrogerät 1 über ein Steuersignal ausgeschaltet, so kann das Elektrogerät 1 über den Versorgungsschalter 2 vom Netz freigeschaltet werden, weil die Energieversorgung des Empfängers über die Batterie 5 während einer ausreichend langen Standzeit in wirtschaftlicher Weise gewährleistet werden kann.

Um die Energieversorgung des Empfängers während des Betriebes des Elektrogerätes 1 vom elektrischen Netz her zu ermöglichen und die Batterie 5 während dieser Zeit zu entlasten, kann ein mit dem elektrischen Netz über den Versorgungsschalter 2 in Verbindung stehender Netzteil 9 vorgesehen werden, der die Schaltung 6 für die Spannungsversorgung des Empfängers speist, wie dies in der Fig. 1 strichpunktiert angedeutet ist.

In der Fig. 2 ist der Handsender der Fernsteuerung in einem Blockschaltbild dargestellt. Der über eine Eingabe 10, beispielsweise ein Tastenfeld, steuerbare Signalgeber 11 weist neben der Schaltung 12 für die Steuersignale eine Schaltung 13 für ein Startsignal auf, das vor jeder Steuersignalübertragung an den Sendeteil 14 weitergeleitet wird, der die elektrischen Signale des Signalgebers 11 in Infrarot-Lichtsignale umwandelt. Dieses Startsignal stellt die Empfangsbereitschaft des Empfängers zumindest für die Dauer der anschließenden Steuersignalübertragung sicher, wie dies bereits ausgeführt wurde. Die Energieversorgung des Handsenders erfolgt in herkömmlicher Weise über eine an eine Schaltung 15 zur Spannungsregelung angeschlossene Batterie 16.

Durch die geschilderten Maßnahmen für eine intermittierende Empfangsbereitschaft des Empfängers wird es in vorteilhafter Weise möglich, Elektrogeräte außerhalb ihres Betriebes vom Netz abzuschalten, ohne auf eine Wiederinbetriebnahme über die Infrarot-Fernsteuerung verzichten zu müssen. Diese Netzfreischaltung der Elektrogeräte kann im Hinblick auf eine Energieeinsparung erfolgen, weil ja der Energieverbrauch eines sonst erforderlichen Netzteiles während der Netzfreischaltung entfällt, oder zur Vermeidung von sonst auftretenden elektrischen Feldern. Diese angegebenen Hauptgründe für die Netzfreischaltung bestimmen auch die wesentlichen Anwendungsgebiete, die sich im Zusammenhang mit Elektrogeräten für ferngesteuerte Antriebe, z. B. Garagentore, Jalousien, Antriebe für Krankenbetten u. dgl., für ferngesteuerte Geräte zur Wiedergabe von Ton- und Bildsignalen, aber auch für medizinische Geräte ergeben. In diesem Zusammenhang ist zu erwähnen, daß die Fernsteuerung nicht auf Infrarotsender beschränkt ist, sondern auch mit elektromagnetischen Wellen oder Ultraschallwellen durchgeführt werden kann. Abgesehen davon ist zum Betreiben des fernsteuerbaren Gerätes nicht zwangsläufig ein elektrisches Versorgungsnetz erforderlich. Wegen des geringen Energiebedarfes für die Empfangsbereitschaft des Empfängers der Fernsteuerung kann der Empfänger auch an die Versorgungsbatterien für ein über diese Versorgungsbatterien betriebenes Gerät angeschlossen werden.

## Patentansprüche

1. Fernsteuerung für ein elektrisch betriebenes, fernsteuerbares Gerät (1), bestehend aus einem Handsender, aus einem dem fernsteuerbaren Gerät (1) zugeordneten Empfänger mit einer Auswerteschaltung (4), die einen das fernsteuerbare Gerät (1) mit einer elektrischen Energiequelle verbindenden Versorgungsschalter (2) steuert, und aus einer batteriegespeisten Schaltung (6) zur Spannungsversorgung des Empfängers, dadurch gekennzeichnet, daß der Empfänger über einen Intervallschalter (7) an der batteriegespeisten Schaltung (6) zur Spannungsversorgung anliegt, daß für den Intervallschalter (7) ein von der Auswerteschaltung (4) steuerbarer Taktgeber (8) vorgesehen ist und daß der Handsender eine Schaltung (13) für ein Startsignal aufweist, dessen Sendezeit die Zeitspanne der Schaltintervalle des Intervallschalters (7) übersteigt.

2. Fernsteuerung nach Anspruch 1, dadurch gekennzeichnet, daß die Schaltung (6) zur Spannungsversorgung an einen Netzteil (9) angeschlossen ist, der mit einem die elektrische Energiequelle bildenden elektrischen Netz über den Versorgungsschalter (2) in Verbindung steht.

3. Fernsteuerung nach Anspruch 1, dadurch gekennzeichnet, daß die Schaltung (6) zur Spannungsversorgung des Empfängers an der aus wenigstens einer Batterie gebildeten elektrischen Energiequelle zum Betreiben des fernsteuerbaren Gerätes (1) angeschlossen ist.
